# FASCICULE DE BREVET EUROPEEN

(11) **EP 3 552 346 B1**
(45) Date de publication et mention de la délivrance du brevet: **27.07.2022**
(21) Numéro de dépôt: 17811320.5
(22) Date de dépôt: 11.12.2017
(51) Int. Cl.: H04L 9/32, H04L 9/40, H04L 1/00

(54) **PROCÉDÉ D'ÉMISSION D'UN MESSAGE, PROCÉDÉ DE RÉCEPTION, DISPOSITIF D'ÉMISSION, DISPOSITIF DE RÉCEPTION ET SYSTÈME DE COMMUNICATION ASSOCIÉS**
VERFAHREN ZUM SENDEN EINER NACHRICHT, VERFAHREN ZUM EMPFANG, SENDEVORRICHTUNG, EMPFANGSVORRICHTUNG UND KOMMUNIKATIONSSYSTEM IM ZUSAMMENHANG DAMIT
METHOD OF SENDING A MESSAGE, METHOD OF RECEPTION, SENDING DEVICE, RECEPTION DEVICE AND COMMUNICATION SYSTEM ASSOCIATED THEREWITH

(30) Priorité: 09.12.2016 FR 1601757
(43) Date de publication de la demande: 16.10.2019
(73) Titulaire: Thales, 92400 Courbevoie (FR)
(72) Inventeur: ROUX, Antoine, 92622 Gennevilliers Cedex (FR); DELPEYRAT, Hervé, 92622 Gennevilliers Cedex (FR)
(74) Mandataire: Lavoix
(86) Numéro de dépôt international: PCT/EP2017/082277
(87) Numéro de publication internationale: WO 2018/104557

(56) Documents cités:
- EP-A1- 2 940 922
- US-A1- 2015 350 241
- Rad Data Communication: "Technology backgrounder", , 22 avril 2016 (2016-04-22), XP055410348, Extrait de l'Internet: URL:http://www.radusa.com/Media/6966_E1bac kgrounder.pdf [extrait le 2017-09-26]
- BHATTACHARJEE SHILADITYA ET AL: "A security scheme to minimize information loss during big data transmission over the internet", 2016 3RD INTERNATIONAL CONFERENCE ON COMPUTER AND INFORMATION SCIENCES (ICCOINS), IEEE, 15 août 2016 (2016-08-15), pages 215-220, XP033022797, DOI: 10.1109/ICCOINS.2016.7783217
- "Gateway control protocol: PCM frame spare bit package", ITU-T DRAFT ; STUDY PERIOD 2013-2016, INTERNATIONAL TELECOMMUNICATION UNION, GENEVA ; CH, 13 novembre 2015 (2015-11-13), pages 1-18, XP044140237,

## Description

La présente invention concerne un procédé d'émission d'un message comprenant des trames de données.

L'invention concerne également un procédé de réception d'un message émis suivant un tel procédé d'émission.

L'invention concerne en outre un dispositif électronique d'émission d'un message comprenant des trames de données.

L'invention concerne également un dispositif électronique de réception d'un message émis par un tel dispositif électronique d'émission.

L'invention concerne aussi un système électronique de communication associé.

De manière générale, les informations sensibles sont traitées et transmises différemment selon leur niveau de classification. Une information est dite sensible lorsque sa divulgation est susceptible d'avoir un impact sur des entités concernées par une telle information.

De ce fait, la transmission de données entre un système ayant un niveau bas de confidentialité et un système ayant un niveau haut de confidentialité est effectuée au moyen de terminaux dédiés et de passerelles spécialisées. Afin de s'assurer qu'aucune donnée du système de niveau haut de confidentialité ne puisse fuiter vers le système de niveau bas de confidentialité, des dispositifs électroniques spécialisés sont utilisés.

De tels dispositifs spécialisés sont notamment conçus pour transmettre les données de manière unidirectionnelle depuis le système de niveau bas de confidentialité vers le système de niveau haut de confidentialité. Ainsi, les données du système de niveau haut de confidentialité ne sont pas accessibles par le système de niveau bas de confidentialité.

Cependant, lors de la transmission des données, il arrive que certaines données soient dégradées ou perdues. Or, du fait de son isolement, le système de niveau haut de confidentialité n'a pas la possibilité d'informer le système de niveau bas de confidentialité que des données sont dégradées ou manquantes.

Une solution connue pour remédier à de telles pertes et/ou dégradations de données consiste à émettre chaque donnée en double exemplaire à des instants distincts.

Néanmoins, une telle émission a pour conséquence de diminuer par deux le débit de données, et n'est donc pas optimale. En outre, une telle solution consomme beaucoup de mémoire puisque les deux exemplaires d'une même donnée sont susceptibles d'être mis en mémoire à la réception, au moins temporairement. De plus, la probabilité de perte d'une trame répétée reste importante en cas de liaison dégradée, ce qui fait qu'une telle solution manque de fiabilité.

Il existe donc un besoin pour la mise en œuvre d'un système permettant de transmettre, de manière fiable et avec un débit de transmission plus élevé, des données entre deux systèmes de niveaux différents de confidentialité. II est connu de l'état de l'art les documents XP055410348 "Technogy Backgrounder data communications E1 EnvironmentXP033022797 "A security scheme to minimize information loss during big data transmission over the internet"

A cet effet, l'invention a pour objet un procédé d'émission d'un message comprenant des trames de données, les trames de données étant numérotées et regroupées en au moins un bloc, le procédé d'émission étant mis en œuvre par un dispositif électronique d'émission et comprenant :
- le calcul d'au moins un code de récupération pour chaque bloc,
- l'émission d'un message contenant le ou les blocs et le ou chaque code de récupération correspondant calculé,
   dans lequel le calcul d'au moins un code de récupération comporte le calcul du reste d'une division euclidienne du numéro de chaque trame par au moins un nombre prédéterminé, et
   chaque code de récupération est obtenu par OU EXCLUSIF entre les trames du bloc correspondant pour lesquelles les restes de la division euclidienne du numéro desdites trames par un même nombre prédéterminé sont égaux.

Suivant d'autres aspects avantageux de l'invention, le procédé d'émission comprend une ou plusieurs des caractéristiques suivantes, prises isolément ou suivant toutes les combinaisons techniquement possibles :
- plusieurs nombres prédéterminés sont utilisés lors du calcul du ou de chaque code de récupération, et lesdits nombres prédéterminés sont premiers entre eux ;
- le produit des nombres prédéterminés est supérieur ou égal au nombre de trames de données contenues dans le message ;
- le nombre de codes de récupération correspondant à chaque bloc est égal à la somme du ou des nombres prédéterminés, cette somme étant égale au nombre prédéterminé lorsque celui-ci est unique.

L'invention concerne également un procédé de réception d'un message émis suivant le procédé d'émission tel que décrit précédemment, le procédé de réception étant mis en œuvre par un dispositif électronique de réception et comprenant :
- la réception de trames de données parmi les trames de données du message émis et de codes de récupération parmi les codes de récupération du message émis, le nombre de trames de données reçues étant inférieur ou égal au nombre de trames de données émises,
- la détermination d'une trame de données manquante par OU EXCLUSIF entre un code de récupération pour lequel seule ladite trame est manquante et les trames reçues pour ledit code de récupération.

Suivant d'autres aspects avantageux de l'invention, le message comprend un premier code de vérification calculé, pour chaque trame, suivant une loi de calcul, et dans lequel le procédé comprend en outre :
- le calcul suivant la loi de calcul d'un deuxième code de vérification, pour chaque trame, et la comparaison du deuxième code de vérification avec le premier code de vérification, et
- la suppression, parmi les trames de données reçues, des trames dont le deuxième code de vérification est différent du premier code de vérification.

L'invention concerne également un dispositif électronique d'émission d'un message comprenant des trames de données, les trames de données étant numérotées et regroupées en au moins un bloc, le dispositif électronique d'émission comprenant :
- un premier module de calcul configuré pour calculer au moins un code de récupération pour chaque bloc,
- un module d'émission configuré pour recevoir un message contenant le ou les blocs et le ou chaque code de récupération correspondant calculé,
dans lequel le premier module de calcul est configuré pour calculer le reste d'une division euclidienne du numéro de chaque trame par au moins un nombre prédéterminé, puis pour calculer chaque code de récupération par OU EXCLUSIF entre les trames du bloc correspondant pour lesquelles les restes de la division euclidienne du numéro desdites trames par un même nombre prédéterminé sont égaux.

L'invention concerne, en outre, un dispositif électronique de réception d'un message émis par le dispositif électronique d'émission tel que décrit précédemment, le dispositif électronique de réception comprenant :
- un module de réception configuré pour recevoir des trames de données parmi les trames de données du message émis et pour recevoir des codes de récupération parmi les codes de récupération du message émis, le nombre de trames de données reçues étant inférieur ou égal au nombre de trames de données émises,
- un module de détermination configuré pour déterminer une trame de données manquante par OU EXCLUSIF entre un code de récupération pour lequel seule ladite trame est manquante et les trames reçues pour ledit code de récupération, la trame déterminée étant alors considérée comme une trame de données reçue par le module de réception.

L'invention porte également sur un système électronique de communication comprenant un dispositif électronique d'émission et un dispositif électronique de réception tels que décrits précédemment.

Suivant d'autres aspects avantageux de l'invention, le système électronique de communication comprend la caractéristique suivante :
- le dispositif électronique d'émission a un premier niveau de confidentialité et le dispositif électronique de réception a un deuxième niveau de confidentialité, le premier niveau de confidentialité étant différent du deuxième niveau de confidentialité.

D'autres caractéristiques et avantages de l'invention apparaitront à la lecture de la description qui suit, donnée uniquement à titre d'exemple non limitatif, et faite en référence aux dessins annexés, sur lesquels :
- la figure 1 est une représentation schématique d'un système électronique de communication selon l'invention,
- la figure 2 est un organigramme d'un procédé d'émission selon l'invention, et
- la figure 3 est un organigramme d'un procédé de réception selon l'invention.

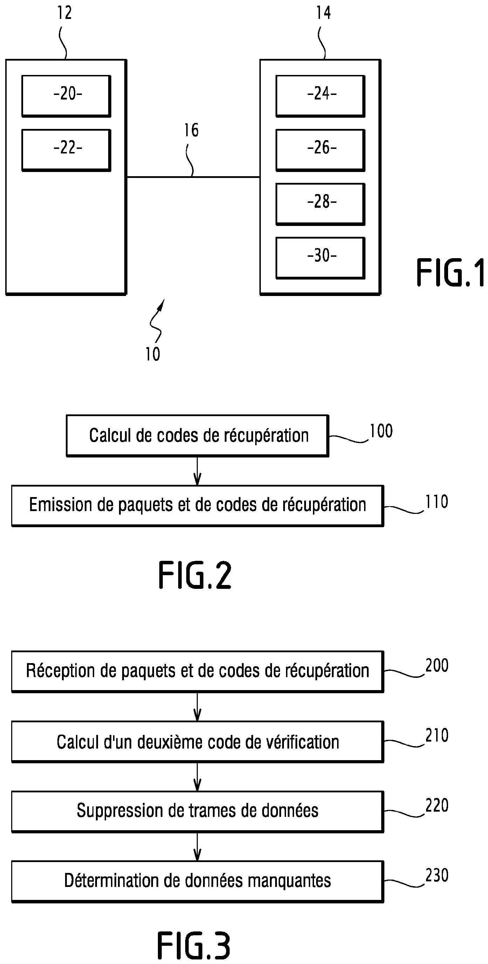

Sur la figure 1, un système électronique 10 de communication est configuré pour mettre en œuvre un procédé de communication d'un message comprenant des trames de données. Il est entendu par l'expression « communiquer un message », la transmission du message depuis un point d'émission vers un point de réception.

Les trames de données sont relatives à un même ensemble de données en provenance d'un fichier initial. Une trame de données est un fragment du fichier initial. Les trames de données ont de préférence la même taille.

Les données du fichier initial et les trames de données sont, de préférence, au format binaire.

Les trames de données sont numérotées. Les numéros de trames de données sont, de préférence, des nombres entiers positifs.

En outre, les trames de données sont regroupées en au moins un bloc. Lorsque les trames de données sont regroupées en plusieurs blocs, les blocs ont de préférence la même taille. Chaque bloc de données est également appelé paquet de données, et le terme paquet est alors analogue au terme bloc au sens de l'invention.

Les trames de données sont, par exemple, des trames de données respectant le protocole UDP (de l'anglais *User Datagram Protocol*, traduit en français par *Protocole de Datagramme Utilisateur).*

Le système de communication 10 comprend un dispositif électronique d'émission 12, un dispositif électronique de réception 14 et une liaison 16 reliant le dispositif électronique d'émission 12 au dispositif électronique de réception 14.

Le dispositif électronique d'émission 12 est configuré pour mettre en œuvre un procédé d'émission d'un message comprenant des trames de données, qui sera décrit plus en détail dans la suite de la description. Le dispositif électronique d'émission 12 a un premier niveau de confidentialité.

Un niveau de confidentialité regroupe une catégorie spécifique d'informations. Les niveaux de confidentialité sont généralement choisis parmi un groupe consistant en : très secret, secret, confidentiel, restreint et non classifié.

Une information classifiée est une information sensible dont l'accès est restreint par une loi ou un règlement à un groupe spécifique de personnes. Les domaines sont, par exemple, des systèmes d'élaboration d'une situation aérienne, spatiale, maritime, terrestre, ou cyber, ou encore des organisations gouvernementales, quel que soit leur niveau de confidentialité.

Le dispositif électronique d'émission 12 comprend un premier module de calcul 20 et un module d'émission 22.

En complément facultatif, le dispositif électronique d'émission 12 comprend en outre, un module de mise en forme des données du fichier initial. Le module de mise en forme est configuré pour découper le fichier initial en trames de même taille et pour numéroter lesdites trames de données. Le module de mise en forme est également configuré pour regrouper les trames de données dans au moins un bloc.

Le dispositif électronique d'émission 12 comprend, par exemple, une première unité de traitement d'informations, non représentée, formée d'une première mémoire et d'un premier processeur associé à la première mémoire.

Le dispositif électronique de réception 14 est configuré pour mettre en œuvre un procédé de réception d'un message émis, qui sera décrit plus en détail dans la suite de la description.

Le dispositif de réception 14 a un deuxième niveau de confidentialité.

Le deuxième niveau de confidentialité est de préférence différent du premier niveau de confidentialité. Par exemple, le deuxième niveau de confidentialité est un niveau de confidentialité plus haut que le premier niveau de confidentialité. Par exemple, le premier niveau de confidentialité du dispositif d'émission 12 est un niveau confidentiel défense et le deuxième niveau de confidentialité du dispositif de réception 14 est un niveau secret défense.

Dans l'exemple de la figure 1, le dispositif de réception 14 comprend un module de réception 24, un deuxième module de calcul 26, un module de suppression 28 et un module de détermination 30.

Le dispositif électronique de réception 14 comprend, par exemple, une deuxième unité de traitement d'informations, non représentée, formée d'une deuxième mémoire et d'un deuxième processeur associé à la deuxième mémoire.

Le premier module de calcul 20 est configuré pour calculer au moins un code de récupération pour chaque bloc. Le calcul d'au moins un code de récupération par le premier module de calcul 20 comprend le calcul du reste d'une division euclidienne du numéro de chaque trame par au moins un nombre prédéterminé.

Le ou chaque nombre prédéterminé est un nombre entier supérieur ou égal à un. Le ou chaque nombre prédéterminé est, par exemple, fourni par l'utilisateur avec le fichier initial comprenant les trames de données à transmettre.

De préférence, lorsque plusieurs nombres prédéterminés sont utilisés par le premier module de calcul 20 pour le calcul de chaque code de récupération, lesdits nombres prédéterminés sont premiers entre eux.

Le premier module de calcul 20 est configuré pour calculer, pour chaque bloc, un nombre de codes de récupération égal à la somme du ou des nombres prédéterminés. Dans le cas où le nombre prédéterminé est unique, ladite somme est égale au nombre prédéterminé.

Par exemple, lorsque les nombres prédéterminés sont les nombres 2, 3 et 5 qui sont des nombres premiers entre eux, le premier module de calcul 20 est propre à calculer 10 codes de récupération par bloc.

Avantageusement, la somme des nombres prédéterminés est inférieure ou égale à 0,3 fois le nombre de trames de données contenues dans le message, de préférence inférieure ou égale à 0,2 fois ledit nombre de trames.

En variante ou en complément, le produit des nombres prédéterminés est supérieur ou égal au nombre de trames de données contenues dans le message.

Le premier module de calcul 20 est configuré pour calculer chaque code de récupération par OU EXCLUSIF entre les trames du bloc correspondant pour lesquels les restes de la division euclidienne du numéro desdites trames par un même nombre prédéterminé sont égaux.

L'opérateur OU EXCLUSIF, également appelé opérateur XOR, est un opérateur binaire qui prend en argument deux nombres booléens et qui retourne le OU EXCLUSIF desdits nombres.

L'opérateur OU EXCLUSIF est un opérateur commutatif et associatif.

Le calcul d'un OU EXCLUSIF entre deux trames revient à calculer le OU EXCLUSIF entre les bits des deux trames. Une telle opération est rapide en terme de temps de calcul.

Dans la suite de la description, les trames de chaque bloc pour lesquelles les restes de la division euclidienne du numéro desdites trames par un même nombre prédéterminé sont égaux sont appelés « trames appariées ».

Le module d'émission 22 est configuré pour émettre un message contenant le ou les blocs et le ou les codes de récupération correspondants calculés.

Le premier module de calcul 20 et le module d'émission 22 sont, par exemple, réalisés chacun sous forme d'un logiciel. La première mémoire de la première unité de traitement d'informations est alors apte à stocker un premier logiciel de calcul configuré pour calculer au moins un code de récupération et un logiciel d'émission configuré pour émettre un message contenant le ou les blocs et le ou les codes de récupération calculés. Lorsque le module d'émission 22 est réalisé sous forme logiciel, il est, par exemple, en outre couplé à un émetteur, tel qu'un émetteur radioélectrique.

En variante, le premier module de calcul 20 et le module d'émission 22 sont réalisés chacun sous forme d'un composant logique programmable, tel qu'un FPGA (de l'anglais *Field-Programmable Gate Array*) ; ou encore sous forme d'un circuit intégré dédié, tel qu'un ASIC (de l'anglais *Application-Specific Integrated Circuit*)*.* Lorsque le module d'émission 22 est réalisé sous forme d'un composant logique programmable ou d'un circuit intégré dédié, il est couplé à un émetteur distinct, tel qu'un émetteur radioélectrique, ou bien intégré à l'émetteur alors réalisé sous forme du composant logique programmable ou du circuit intégré dédié.

Le module de réception 24 est configuré pour recevoir des trames de données émises par le module d'émission 22 du dispositif d'émission 12. Le module de réception 24 est également configuré pour recevoir des codes de récupération émis par le module d'émission 22.

Le nombre de trames de données reçues est inférieur ou égal au nombre de trames de données émises. Le nombre de codes de récupération reçus est inférieur ou égal au nombre de codes de récupération émis. En effet, il est possible que des trames de données et/ou que des codes de récupération aient été perdues entre l'émission du message par le dispositif d'émission 12 et la réception du message correspondant par le dispositif de réception 14.

Les trames de données émises et non reçues par le module de réception 24 sont appelées trames de données manquantes.

Le deuxième module de calcul 26 et le module de suppression 28 sont des modules optionnels.

Le deuxième module de calcul 26 et le module de suppression 28 sont utilisés lorsque le message comprend un premier code de vérification pour chaque trame.

Le premier code de vérification est propre à chaque trame. Le premier code de vérification est calculé pour chaque trame suivant une loi de calcul. Le premier code de vérification est un moyen de contrôle de l'intégrité des trames de données transmises. Le premier code de vérification comprend des éléments redondants vis à vis de la trame, permettant de détecter des erreurs de transmission ou des dégradations de la trame de données correspondante. Le premier code de vérification est, par exemple, un code CRC (de l'anglais *Cyclic Redondant Check*, traduit en français par *Contrôle de Redondance Cyclique).*

Pour chaque trame reçue par le module de réception 24, le deuxième module de calcul 26 est propre à calculer, suivant la loi de calcul, un deuxième code de vérification. Pour chaque trame, le deuxième module de calcul 26 est également configuré pour comparer le deuxième code de vérification calculé avec le premier code de vérification correspondant.

Le module de suppression 28 est configuré pour supprimer, parmi les trames de données reçues, les trames de données dont le deuxième code de vérification est différent du premier code de vérification. Les trames de données supprimées sont considérées comme étant des trames de données manquantes.

Le module de détermination 30 est configuré pour déterminer une trame de données manquante par OU EXCLUSIF entre un code de récupération pour lequel seule ladite trame est manquante et les trames reçues pour ledit code de récupération.

La détermination effectuée par le module de détermination 30 se base sur le fait que le OU EXCLUSIF est commutatif et associatif. Ainsi, lorsqu'une seule trame est manquante dans un code de récupération et que ledit code de récupération a été reçu par le module de réception 24, la trame de données manquante est égale au OU EXCLUSIF entre ledit code de récupération et les trames de données reçues, et non-manquantes, dudit code.

Plus précisément, le module de détermination 30 est configuré pour déterminer l'ensemble des trames de données manquantes jusqu'à ce qu'une condition de récupération soit remplie.

La condition de récupération est remplie lorsque le nombre de trames de données manquantes formant chaque code de récupération est différent de 1. En d'autres termes, tant qu'il y a une seule trame de données manquante pour au moins un code de récupération, la condition de récupération n'est pas remplie, et il est alors encore possible de récupérer au moins une trame de données manquante.

Le module de réception 24, le module de détermination 30, et en complément facultatif le deuxième module de calcul 26 et le module de suppression 28, sont, par exemple, réalisés chacun sous forme d'un logiciel. La deuxième mémoire de la deuxième unité de traitement d'informations est alors apte à stocker un logiciel de réception configuré pour recevoir des trames de données et un logiciel de détermination configuré pour déterminer au moins une trame de données manquantes. Lorsque le module de réception 24 est réalisé sous forme logiciel, il est, par exemple, en outre couplé à un récepteur, tel qu'un récepteur radioélectrique. En complément facultatif, la deuxième mémoire est apte à stocker un deuxième logiciel de calcul configuré pour calculer suivant une loi de calcul un deuxième code de vérification et pour comparer le deuxième code de vérification calculé avec un premier code de vérification. En complément facultatif, la deuxième mémoire 74 est apte à stocker un logiciel de suppression configuré pour supprimer les trames dont le deuxième code de vérification est différent du premier code de vérification correspondant.

En variante, le module de réception 24, le module de détermination 30, et en complément facultatif le deuxième module de calcul 26 et le module de suppression 28, sont réalisés chacun sous forme d'un composant logique programmable, tel qu'un FPGA ; ou encore sous forme d'un circuit intégré dédié, tel qu'un ASIC. Lorsque le module de réception 24 est réalisé sous forme d'un composant logique programmable ou d'un circuit intégré dédié, il est couplé à un récepteur distinct, tel qu'un récepteur radioélectrique, ou bien intégré au récepteur alors réalisé sous forme du composant logique programmable ou du circuit intégré dédié.

La liaison 16 est configurée pour assurer la transmission de messages entre le dispositif électronique d'émission 12 et le dispositif électronique de réception 14.

Dans le cas où le premier niveau de confidentialité du dispositif d'émission 12 est plus bas que le deuxième niveau de confidentialité du dispositif de réception 14, la liaison 16 est un lien de transmission unidirectionnel autorisant le transfert de message uniquement depuis le dispositif d'émission 12 vers le dispositif de réception 14.

En variante, lorsqu'il n'existe pas de contrainte relative au niveau de confidentialité des dispositifs d'émission 12 et de réception 14, ou lorsque les dispositifs d'émission 12 et de réception 14 sont de même niveau de confidentialité, la liaison 16 comprend un ou plusieurs liens de transmission unidirectionnels, ou encore un ou plusieurs liens de transmission bidirectionnels.

La liaison 16 comprend, par exemple, une diode optique. En variante, la liaison 16 comprend, par exemple, une diode logicielle. Une diode logicielle est une diode comprenant un composant logiciel configuré pour autoriser seulement une communication unidirectionnelle de données, c'est-à-dire configuré pour autoriser la circulation des données selon un unique sens, et pour interdire la circulation des données selon l'autre sens, i.e. pour interdire la circulation de données selon le sens opposé au sens autorisé de circulation des données.

Un procédé de communication de messages va maintenant être décrit en référence aux figures 2 et 3.

Le procédé de communication comprend un procédé d'émission d'un message comprenant des trames de données et un procédé de réception du message émis par un tel procédé d'émission.

Le procédé d'émission est illustré sur la figure 2.

Le procédé d'émission est mis en œuvre par le dispositif électronique d'émission 12.

Initialement, un fichier initial est fourni au dispositif d'émission 12. Le fichier initial comprend des trames de données numérotées et regroupées par blocs.

Le procédé d'émission comprend une étape 100 de calcul, dans laquelle le premier module de calcul 20 calcule au moins un code de récupération pour chaque bloc.

Pour cela, le premier module de calcul 20 calcule le reste d'une division euclidienne du numéro de chaque trame par un nombre prédéterminé.

Puis, le premier module de calcul 20 calcule chaque code de récupération par OU EXCLUSIF entre des trames appariées.

Dans ce qui suit, il est donné un exemple de calcul de codes de récupération pour un bloc comprenant 30 trames numérotées. Les trames sont notées « Ti », i désignant le numéro de la trame, i variant de 0 à 29. Le nombre prédéterminé utilisé pour calculer le code de récupération est 2.

Dans l'exemple, le premier module de calcul 20 calcule un nombre de codes de récupération pour le bloc égal au nombre prédéterminé, soit 2 codes de récupération.

A partir du nombre prédéterminé égal à 2, le premier module de calcul 20 est configuré pour calculer les 2 codes de récupération suivants :
*C*(2,0) = *T*0^*T*2^*T*4^*T*6^*T*8^*T*10*^*T12^*T*14^*T*16^*T*18^*T*20^*T*22^*T*24^*T*26^*T*28
*C*(2,1) = *T*1^*T*3^*T*5^*T*7^*T*9^*T*11^*T*13^*T*15^*T*17^*T*19^*T*21^*T*23^*T*25^*T*27^*T*29,
où ^ désigne l'opérateur OU EXCLUSIF.

Le code de récupération C(2,0) est obtenu par OU EXCLUSIF entre les trames dont le reste de la division euclidienne du numéro desdites trame par 2 est égal à 0. Le code de récupération C(2,1) est obtenu par OU EXCLUSIF entre les trames dont le reste de la division euclidienne du numéro desdites trame par 2 est égal à 1.

Dans la suite de la description, la notation « *C*(*m*,*n*) » désigne un code de récupération obtenu par OU EXCLUSIF entre les trames d'un bloc dont le reste de la division euclidienne du numéro desdites trame par « m » est égal à « n ».

Le procédé d'émission comprend, ensuite, une étape 110 d'émission, dans laquelle le module d'émission 22 émet un message contenant le ou les blocs et le ou les codes de récupération correspondants calculés.

La liaison 16 transmet le message depuis le module d'émission 22 du dispositif d'émission 12 vers le module de réception 24 du dispositif de réception 14.

Le procédé de réception est illustré sur la figure 3.

Le procédé de réception comprend une étape 200 de réception, dans laquelle le module de réception 24 reçoit, ensuite, des trames de données parmi les trames de données du message émis par le module d'émission 22 du dispositif d'émission 12. Le module de réception 24 reçoit également des codes de récupération parmi les codes de récupération du message émis par le module d'émission 22.

Lorsque le message comprend, pour chaque trame, un premier code de vérification calculé suivant une loi de calcul, le procédé de réception comprend une étape 210 de calcul et de comparaison, dans laquelle le deuxième module de calcul 26 calcule, suivant la loi de calcul, pour chaque trame reçue par le module de réception 24, un deuxième code de vérification.

Pour chaque trame reçue, le deuxième module de calcul 26 compare, ensuite, le deuxième code de vérification calculé avec le premier code de vérification correspondant.

Le procédé de réception comprend, ensuite, une étape 220 de suppression, dans laquelle le module de suppression 28 supprime, parmi les trames de données reçues, les trames de données dont le deuxième code de vérification est différent du premier code de vérification.

Le procédé de réception comprend, également, une étape 230 de détermination, dans laquelle le module de détermination 30 détermine les trames de données manquantes par OU EXCLUSIF entre un code de récupération pour lequel seule ladite trame est manquante et les trames reçues pour ledit code de récupération, jusqu'à ce que la condition de récupération soit remplie.

Dans ce qui suit, il est donné un exemple de détermination de trames de données manquantes pour un message émis par le dispositif d'émission 12 comprenant un bloc de 100 trames et 23 codes de récupération. Les 100 trames sont numérotées T0 à T99. Les 23 codes de récupération ont été obtenus avant émission à partir du numéro desdites trames et des nombres prédéterminés 5, 7 et 11. Le module de réception 24 a reçu tous les codes de récupération et toutes les trames à l'exception des trames T10, T11, T15, T22 et T60 qui sont manquantes.

Dans l'exemple, le module de détermination 30 détermine tout d'abord les trames de données manquantes pour lesquelles seule ladite trame est manquante dans au moins un code de récupération. Il s'agit des trames T10, T15 et T60. En effet, la trame T10 est déterminable à partir du code de récupération *C*(11,10). La trame T15 est déterminable à partir du code de récupération *C*(11,4). La trame T60 est déterminable à partir du code de récupération *C*(11,5).

Puis, lors d'une deuxième itération, le module de détermination 30 détermine la trame de données manquante T11. La trame T11 est déterminable à partir du code de récupération C(7,4). L'homme du métier observera que la détermination de la trame T11 lors de la première itération n'était pas possible avec le code de récupération C(7,4) car la trame T60, faisant partie du code C(7,4), était elle aussi manquante.

Ensuite, lors d'une troisième itération, le module de détermination 30 détermine la trame de données manquante T22. La trame T22 est déterminable à partir du code de récupération *C*(11,0). L'homme du métier observera que la détermination de la trame T22 lors de la deuxième itération n'était pas possible avec le code de récupération *C*(11,0) car la trame T11, faisant partie du code *C*(11,0), était elle aussi manquante.

Dans l'exemple, la condition de récupération est remplie lorsque la trame T22 est déterminée, c'est-à-dire lorsqu'il n'y a plus de trame de données manquante.

Ainsi, les trames sont réparées, c'est-à-dire récupérées, de manière itérative. La détermination d'une trame de données manquante lors d'une itération est susceptible d'entraîner la détermination d'une autre trame de données manquante lors de l'itération suivante.

Ainsi, le système 10 de communication selon l'invention et le procédé associé mettent en œuvre le calcul d'un code de récupération utilisant les caractéristiques de l'opérateur OU EXCLUSIF, dont le calcul présente l'avantage d'être rapide.

Le taux de récupération de trames de données manquantes obtenu avec un tel procédé est supérieur au taux de récupération obtenu avec les procédés de l'état de la technique pouvant traiter une quantité d'information quelconque et potentiellement très importante, en particulier avec une simple répétition des trames.

En outre, le débit de transmission est également supérieur au débit de transmission obtenu avec les procédés de l'état de la technique, en particulier avec une simple répétition des trames. Le ratio utile du débit de transmission obtenu par mise en œuvre du présent procédé est, avantageusement, égal au nombre de trames par bloc de données divisé par la somme du nombre de trames par bloc et du nombre de codes.

Le système et le procédé de communication selon l'invention sont particulièrement adaptés à la transmission de messages depuis un dispositif ayant un niveau bas de confidentialité vers un dispositif ayant un niveau haut de confidentialité, et pour laquelle le dispositif de niveau haut de confidentialité ne peut pas communiquer avec l'extérieur.

Ainsi, le système et le procédé de communication permettent de transmettre, de manière fiable et avec un débit de transmission élevé, des données entre deux systèmes de niveaux de confidentialité différents.

L'invention est définie par l'objet des revendications indépendantes.

## Revendications

1. Procédé d'émission d'un message comprenant des trames de données (Ti), les trames de données (Ti) étant numérotées et regroupées en au moins un bloc, le procédé d'émission étant mis en œuvre par un dispositif électronique d'émission (12) et comprenant :
- le calcul (100) d'au moins un code de récupération (*C*(*m*, *n*)) pour chaque bloc,
- l'émission (110) d'un message contenant le ou les blocs et le ou chaque code de récupération (*C*(*m*, *n*)) correspondant calculé, et en ce que le calcul (100) d'au moins un code de récupération (*C*(*m*, *n*)) comporte le calcul du reste d'une division euclidienne du numéro de chaque trame (Ti) par au moins un même nombre prédéterminé, et **caractérisé en ce que** J la somme des nombres prédéterminés étant inférieure ou égale à 0,3 fois le nombre de trames de données (Ti) contenues dans le message, et
chaque code de récupération (C(m,n)) est obtenu par OU EXCLUSIF entre les trames (Ti) du bloc correspondant pour lesquelles les restes de la division euclidienne du numéro desdites trames (Ti) par un même nombre prédéterminé sont égaux.

2. Procédé d'émission selon la revendication 1, dans lequel plusieurs nombres prédéterminés sont utilisés lors du calcul (100) du ou de chaque code de récupération (*C*(*m*, *n*)), et lesdits nombres prédéterminés sont premiers entre eux.

3. Procédé d'émission selon la revendication 2, dans lequel le produit des nombres prédéterminés est supérieur ou égal au nombre de trames de données contenues dans le message.

4. Procédé d'émission selon l'une quelconque des revendications 1 à 3, dans lequel le nombre de codes de récupération (*C*(*m, n*)) correspondant à chaque bloc est égal à la somme du ou des nombres prédéterminés, cette somme étant égale au nombre prédéterminé lorsque celui-ci est unique.

5. Procédé de réception d'un message émis suivant le procédé d'émission selon l'une quelconque des revendications 1 à 4, le procédé de réception étant mis en œuvre par un dispositif électronique de réception (14) et comprenant :
- la réception (200) de trames de données (Ti) parmi les trames de données (Ti) du message émis et de codes de récupération *(C(m, n))* parmi les codes de récupération (*C*(*m*, *n*)) du message émis, le nombre de trames de données (Ti) reçues étant inférieur ou égal au nombre de trames de données (Ti) émises,
- la détermination (230) d'une trame de données (Ti) manquante par OU EXCLUSIF entre un code de récupération (*C*(*m*, *n*)) pour lequel seule ladite trame (Ti) est manquante et les trames (Ti) reçues pour ledit code de récupération (*C*(*m*, *n*)).

6. Procédé de réception selon la revendication 5, dans lequel le message comprend un premier code de vérification calculé, pour chaque trame (Ti), suivant une loi de calcul, et
dans lequel le procédé comprend en outre :
- le calcul (210) suivant la loi de calcul d'un deuxième code de vérification, pour chaque trame (Ti), et la comparaison du deuxième code de vérification avec le premier code de vérification, et
- la suppression (220), parmi les trames de données (Ti) reçues, des trames (Ti) dont le deuxième code de vérification est différent du premier code de vérification.

7. Dispositif électronique (12) d'émission d'un message comprenant des trames de données (Ti), les trames de données (Ti) étant numérotées et regroupées en au moins un bloc, le dispositif électronique d'émission (12) comprenant :
- un premier module de calcul (20) configuré pour calculer au moins un code de récupération (*C*(*m*, *n*)) pour chaque bloc,
- un module d'émission (22) configuré pour recevoir un message contenant le ou les blocs et le ou chaque code de récupération (*C*(*m*, *n*)) correspondant calculé, et en ce que le premier module de calcul (20) est configuré pour calculer le reste d'une division euclidienne du numéro de chaque trame (Ti) par au moins un même nombre prédéterminé, et **caractérisé en ce que** la somme des nombres prédéterminés étant inférieure ou égale à 0,3 fois le nombre de trames de données (Ti) contenues dans le message, puis pour calculer chaque code de récupération (*C*(*m*, *n*)) par OU EXCLUSIF entre les trames (Ti) du bloc correspondant pour lesquelles les restes de la division euclidienne du numéro desdites trames (Ti) par un même nombre prédéterminé sont égaux.

8. Dispositif électronique (14) de réception d'un message émis par un dispositif électronique d'émission (12) selon la revendication 7, le dispositif électronique de réception (14) comprenant :
- un module de réception (24) configuré pour recevoir des trames de données (Ti) parmi les trames de données (Ti) du message émis et pour recevoir des codes de récupération *(C(m, n))* parmi les codes de récupération (*C*(*m, n*)) du message émis, le nombre de trames de données (Ti) reçues étant inférieur ou égal au nombre de trames de données (Ti) émises,
- un module de détermination (30) configuré pour déterminer une trame de données (Ti) manquante par OU EXCLUSIF entre un code de récupération *(C(m, n))* pour lequel seule ladite trame (Ti) est manquante et les trames (Ti) reçues pour ledit code de récupération *(C(m, n)),* la trame (Ti) déterminée étant alors considérée comme une trame de données (Ti) reçue par le module de réception (24).

9. Système électronique de communication (10) comprenant un dispositif électronique d'émission (12) selon la revendication 7 et un dispositif électronique de réception (14) selon la revendication 8.

10. Système électronique de communication (10) selon la revendication 9, dans lequel le dispositif électronique d'émission (12) a un premier niveau de confidentialité et le dispositif électronique de réception (14) a un deuxième niveau de confidentialité, le premier niveau de confidentialité étant différent du deuxième niveau de confidentialité.

## Patentansprüche

1. Sendeverfahren einer Nachricht, umfassend Datenframe (Ti), wobei die Datenframe (Ti) nummeriert und in mindestens einem Block zusammengefasst sind, wobei das Sendeverfahren von einer elektronischen Sendevorrichtung (12) durchgeführt wird und umfassend:
- die Berechnen (100) mindestens eines Wiederherstellungscodes *(C(m, n))* für jeden Block,
- das Senden (110) einer Nachricht, die den oder die Blöcke und den oder jeden entsprechend berechneten Wiederherstellungscode *(C(m, n))* enthält,
und, dass das Berechnen (100) mindestens eines Wiederherstellungscodes *(C(m, n))* das Berechnen des Rests einer euklidischen Division der Zahl von jedem Frame (Ti) durch mindestens eine gleiche vorbestimmte Zahl umfasst, und **dadurch gekennzeichnet, dass** die Summe der vorbestimmten Zahlen kleiner als oder gleich wie das 0,3-fache der Zahl an Datenframes (Ti) ist, die in der Nachricht enthalten sind, und
jeder Wiederherstellungscode *(C(m, n))* durch AUSSCHLIESSLICHES ODER zwischen den Frames (Ti) des entsprechenden Blocks erlangt wird, für welche die Reste der euklidischen Division der Zahl der Frame (Ti) durch eine gleiche vorbestimmte Zahl gleich sind.

2. Sendeverfahren nach Anspruch 1, wobei beim Berechnen (100) des oder jedes Wiederherstellungscodes *(C(m, n))* mehrere vorbestimmte Zahlen verwendet werden und die vorbestimmten Zahlen untereinander Primzahlen sind.

3. Sendeverfahren nach Anspruch 2, wobei das Produkt der vorbestimmten Zahlen größer als oder gleich wie die Zahl der in der Nachricht enthaltenen Datenframe ist.

4. Sendeverfahren nach einem der Ansprüche 1 bis 3, wobei die Zahl der jedem Block entsprechenden Wiederherstellungscodes *(C(m, n))* gleich wie die Summe der vorbestimmten Zahl oder Zahlen ist, wobei diese Summe gleich wie die vorbestimmte Zahl ist, wenn diese eindeutig ist.

5. Empfangsverfahren einer Nachricht, die gemäß dem Sendeverfahren nach einem der Ansprüche 1 bis 4 gesendet wird, wobei das Empfangsverfahren von einer elektronischen Empfangsvorrichtung (14) durchgeführt wird und Folgendes umfasst:
- Empfangen (200) von Datenframes (Ti) aus den Datenframes (Ti) der gesendeten Nachricht und von Wiederherstellungscodes *(C(m, n))* aus den Wiederherstellungscodes *(C(m, n))* der gesendeten Nachricht, wobei die Zahl der empfangenen Datenframes (Ti) kleiner als oder gleich wie die Anzahl der gesendeten Datenframes (Ti) ist,
- Bestimmen (230) eines fehlenden Datenframes (Ti) durch AUSSCHLIESSLICHES ODER zwischen einem Wiederherstellungscode *(C(m, n)),* für den nur das Frame (Ti) fehlt, und den Frames (Ti), die für den Wiederherstellungscode *(C(m, n))* empfangen werden.

6. Empfangsverfahren nach Anspruch 5, wobei die Nachricht einen ersten Überprüfungscode umfasst, der für jedes Frame (Ti) gemäß einem Rechengesetz berechnet wird, und
wobei das Verfahren ferner Folgendes umfasst:
- Berechnen (210) gemäß dem Rechengesetz eines zweiten Überprüfungscodes für jedes Frame (Ti) und Vergleichen des zweiten Überprüfungscodes mit dem ersten Überprüfungscode, und
- Löschen (220), aus den empfangenen Datenframes (Ti), jener Frames (Ti), deren zweiter Überprüfungscode sich von dem ersten Überprüfungscode unterscheidet.

7. Elektronische Vorrichtung (12) zum Senden einer Nachricht, umfassend Datenframe (Ti), wobei die Datenframes (Ti) nummeriert und in mindestens einem Block zusammengefasst sind, die elektronische Sendevorrichtung (12) umfassend:
- ein erstes Rechenmodul (20), das konfiguriert ist, um mindestens einen Wiederherstellungscode *(C(m, n))* für jeden Block zu berechnen,
- ein Sendemodul (22), das konfiguriert ist, um eine Nachricht zu empfangen, die den oder die Blöcke und den oder jeden entsprechenden berechneten Wiederherstellungscode *(C(m, n))* enthält,
und dass das erste Rechenmodul (20) konfiguriert ist, um den Rest einer euklidischen Division der Zahl von jedem Frame (Ti) durch mindestens eine gleiche vorbestimmte Zahl zu berechnen, und **dadurch gekennzeichnet, dass** die Summe der vorbestimmten Zahlen kleiner als oder gleich wie das 0,3-fache der Zahl der in der Nachricht enthaltenen Datenframes (Ti) ist, und dann, um jeden Wiederherstellungscode *(C(m, n))* durch AUSSCHLIESSLICHES ODER zwischen den Frames (Ti) des entsprechenden Blocks zu berechnen, für welche die Reste der euklidischen Division der Zahl der Frame (Ti) durch eine gleiche vorbestimmte Zahl gleich sind.

8. Elektronische Vorrichtung (14) zum Empfangen einer Nachricht, die von einer elektronischen Sendevorrichtung (12) nach Anspruch 7 gesendet wird, die elektronische Empfangsvorrichtung (14) umfassend:
- ein Empfangsmodul (24), das konfiguriert ist, um Datenframes (Ti) aus den Datenframes (Ti) der gesendeten Nachricht zu empfangen und um Wiederherstellungscodes *(C(m, n))* aus den Wiederherstellungscodes *(C(m, n))* der gesendeten Nachricht zu empfangen, wobei die Zahl der empfangenen Datenframe (Ti) kleiner als oder gleich wie der Zahl der gesendeten Datenframe (Ti) ist,
- ein Bestimmungsmodul (30), das konfiguriert ist, um ein fehlendes Datenframe (Ti) durch AUSSCHLIESSLICHES ODER zwischen einem Wiederherstellungscode *(C(m, n)),* für den nur das Frame (Ti) fehlt, und das für den Wiederherstellungscode *(C(m, n))* empfangene Frame (Ti) zu bestimmen, wobei das bestimmte Frame (Ti) dann als ein von dem Empfangsmodul (24) empfangenes Datenframe (Ti) betrachtet wird.

9. Elektronisches Kommunikationssystem (10), umfassend eine elektronische Sendevorrichtung (12) nach Anspruch 7 und eine elektronische Empfangsvorrichtung (14) nach Anspruch 8.

10. Elektronisches Kommunikationssystem (10) nach Anspruch 9, wobei die elektronische Sendevorrichtung (12) eine erste Vertraulichkeitsstufe und die elektronische Empfangsvorrichtung (14) eine zweite Vertraulichkeitsstufe aufweist, wobei sich die erste Vertraulichkeitsstufe von der zweiten Vertraulichkeitsstufe unterscheidet.

## Claims

1. Method for emitting a message comprising data frames (Ti), the data frames (Ti) being numbered and grouped into at least one block, the emission method being implemented by an electronic emission device (12) and comprising:
- the calculation (100) of at least one recovery code (*C*(*m*, *n*)) for each block,
- the emission (110) of a message containing the block(s) and the, or each, corresponding calculated recovery code (*C*(*m*, *n*)),
and in that the calculation (100) of at least one recovery code (*C*(*m*, *n*)) comprises calculating the remainder of a Euclidean division of the number of each frame (Ti) by at least a same predetermined number, and **characterized in that** the sum of the predetermined numbers being less than or equal to 0.3 times the number of data frames (Ti) contained in the message, and
each recovery code (*C*(*m*, *n*)) is obtained by EXCLUSIVE OR between the frames (Ti) of the corresponding block for which the remainders of the Euclidean division of the number of the said frames (Ti) by the same predetermined number are equal.

2. Emission method according to claim 1, wherein a plurality of predetermined numbers are used in the calculation (100) of the, or each, recovery code (*C*(*m*, *n*)), and the said predetermined numbers are mutually prime numbers.

3. Emission method according to claim 2, wherein the product of the predetermined numbers is greater than or equal to the number of data frames contained in the message.

4. Emission method according to any one of claims 1 to 3, wherein the number of recovery codes (*C*(*m*, *n*)) corresponding to each block is equal to the sum of the predetermined number(s), this sum being equal to the predetermined number when it is unique.

5. Method for receiving a message emitted according to the emission method according to any one of claims 1 to 4, the reception method being implemented by an electronic reception device (14) and comprising:
- the reception (200) of data frames (Ti) among the data frames (Ti) of the emitted message and recovery codes (*C*(*m*, *n*)) among the recovery codes (*C*(*m*, *n*)) of the emitted message, the number of received data frames (Ti) being less than or equal to the number of emitted data frames (Ti),
- the determination (230) of a missing data frame (Ti) by EXCLUSIVE OR between a recovery code (*C*(*m*, *n*)) for which only the said frame (Ti) is missing, and the frames (Ti) received for the said recovery code (*C*(*m*, *n*)).

6. Reception method according to claim 5, wherein the message comprises a first calculated verification code, for each frame (Ti), according to a calculation law, and
wherein the method further comprises:
- the calculation (210) according to the calculation law of a second verification code for each frame (Ti), and the comparison of the second verification code with the first verification code, and
- the deletion (220), among the received data frames (Ti), of the frames (Ti) whose second verification code is different from the first verification code.

7. Electronic emission device (12) for sending a message comprising data frames (Ti), the data frames (Ti) being numbered and grouped into at least one block, the electronic emission device (12) comprising:
- a first calculation module (20) configured to calculate at least one recovery code (*C*(*m, n*)) for each block,
- an emission module (22) configured to receive a message containing the block(s) and the, or each, corresponding calculated recovery code (*C*(*m*, *n*)),
and in that the first calculation module (20) is configured to calculate the remainder of a Euclidean division of the number of each frame (Ti) by at least a same predetermined number, and **characterized in that** the sum of the predetermined numbers being less than or equal to 0.3 times the number of data frames (Ti) contained in the message, and then to calculate each recovery code (*C*(*m*, *n*)) by EXCLUSIVE OR between the frames (Ti) of the corresponding block for which the remainders of the Euclidean division of the number of the said frames (Ti) by the same predetermined number, are equal.

8. Electronic reception device (14) for receiving a message from an electronic emission device (12) according to claim 7, the electronic reception device (14) comprising:
- a reception module (24) configured to receive data frames (Ti) among the data frames (Ti) of the emitted message and to receive recovery codes *(C(m, n*)) among the recovery codes (*C*(*m*, *n*)) of the emitted message, the number of received data frames (Ti) being less than or equal to the number of emitted data frames (Ti),
- a determination module (30) configured to determine a missing data frame (Ti) by EXCLUSIVE OR between a recovery code (*C*(*m*, *n*)) for which only the said frame (Ti) is missing and the frames (Ti) received for the said recovery code (*C*(*m*, *n*)), the determined frame (Ti) being then considered as a data frame (Ti) received by the reception module (24).

9. Electronic communication system (10) comprising an electronic emission device (12) according to claim 7 and an electronic reception device (14) according to claim 8.

10. Electronic communication system (10) according to claim 9, wherein the electronic emission device (12) has a first level of confidentiality and the electronic reception device (14) has a second level of confidentiality, wherein the first level of confidentiality is different from the second level of confidentiality.
